# EUROPEAN PATENT SPECIFICATION

(11) **EP 0 547 885 B1**
(45) Date of publication and mention of the grant of the patent: **07.05.1997**
(21) Application number: 92311494.6
(22) Date of filing: 16.12.1992
(51) Int. Cl.: A01D 17/00, A01D 21/04

(54) **Harvester for agricultural products**
Erntemaschine für landwirtschaftliche Erzeugnisse
Moissonneuse pour produits agricoles

(30) Priority: 17.12.1991 JP 353403/91; 17.12.1991 JP 353407/91; 17.12.1991 JP 353408/91; 17.12.1991 JP 353409/91; 14.07.1992 JP 209809/92; 14.07.1992 JP 55297/92
(43) Date of publication of application: 23.06.1993
(73) Proprietor: Kobashi Kogyo Co., Ltd., Okayama-shi Okayama-ken (JP)
(72) Inventor: Kobashi, Takeshi, Okayama-shi, Okayama-ken (JP); Ota, Kazuyoshi, Okayama-shi, Okayama-ken (JP); Sato, Toyonori, Okayama-shi, Okayama-ken (JP); Kakehi, Akihiko, Okayama-shi, Okayama-ken (JP); Oda, Minoru, Okayama-shi, Okayama-ken (JP); Morikawa, Kouji, Okayama-shi, Okayama-ken (JP)
(74) Representative: BATCHELLOR, KIRK & CO.

(56) References cited:
- DE-A- 3 515 878
- DE-A- 3 726 559
- DE-A- 3 733 712
- DE-B- 2 749 558
- GB-A- 760 704

## Description

This invention is concerned with harvesters for agricultural products, more particularly to harvesters for root crops such as sweet potato, potato, onion, beet, taro, and carrot from fields, and for sorting them.

Harvesters for root crops are known e.g. potato harvesters, beet harvesters, and potato diggers, inter alia are known. A riding tractor and a walking tractor, each of which has a digger blade, and a link-rod chain conveyer provided at the rear of the digger blade, have also been used.

The aforementioned harvesters and diggers are very large and really only suited for big fields.

On the other hand, the riding or walking tractor having a digger blade and a conveyer have been developed for use on smaller fields. Such machines dig up root crops from a field and discharge them on to the field. Therefore, it is necessary to pick up the dug root crops from the field and to sort them on a machine. Furthermore, since parts such as blade and conveyer are attached on the tractor, it is difficult to manoeuver the tractor during harvesting and sorting of the root crops, particularly whilst steering.

DE-A-3 515 878 discloses a harvester for root crops having the essential features of the present invention mentioned in the pre-characterising part of claim 1.

An object of the present invention is to provide a harvester for root crops which can mitigate or alleviate the above mentioned disadvantages.

Accordingly there is provided a harvester according to claim 1.

In order that the invention and its preferred features may be illustrated, more fully understood and readily carried into effect, embodiments thereof will now be described purely by way of non-limiting example only and with reference to the accompanying drawings, wherein:
Figs. 1a and 1b are plan views showing a potato harvester according to the present invention;
Fig. 2 is a side view of the potato harvester;
Fig. 3 is a front view of the potato harvester;
*Fig. 4 is an enlarged rartially sectioned plan view of part of a digger/conveyer device;*
*Fig. 5 is a side view of the harvester having a modified grading conveyer;*
Fig. 6 is an enlarged side view showing a rack for a container;
Fig. 7 is a side view of the rack in a folded state;
Fig. 8 is a plan view showing a modification of a control lever in a control section;
Fig. 9 is a perspective view showing a control system of the harvester;
Fig. 10 is a schematic plan view showing a transmission of the harvester;
Fig. 11 is a plan view showing an example of a harvester having a modified working seat for grading;
*Figs. 12a and 12b are explanatory views showing modified working seats;*
Figs. 13a and 13b are explanatory views showing another modification of the working seats;
Fig. 14 is a schematic side view of the harvester having additional fittings;
Fig. 15 is a plan view showing a second embodiment of the harvester according to the present invention;
Fig. 16 is a side view of the second embodiment;
Fig. 17 is a schematic rear view of the second embodiment;
Fig. 18 is a perspective view of the second embodiment;
Fig. 19 is a plan view showing a modification of a grading conveyer of the second embodiment;
Fig. 20 is a plan view showing another modification of the grading conveyer;
Fig. 21 is a plan view showing a further modification of the grading conveyer;
Fig. 22 is a plan view showing a modification of the second embodiment; and
Fig. 23 is a side view of the modification *shown in figure 22*.

### DETAILED DESCRIPTION

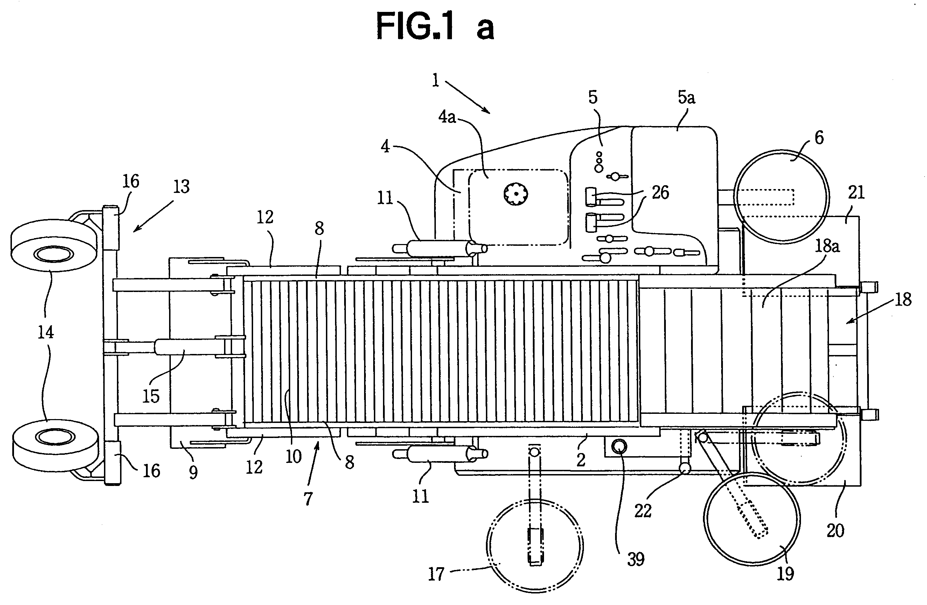

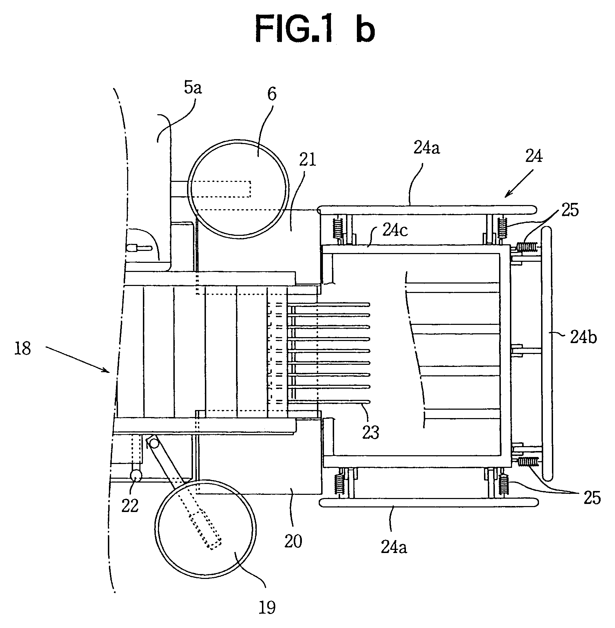

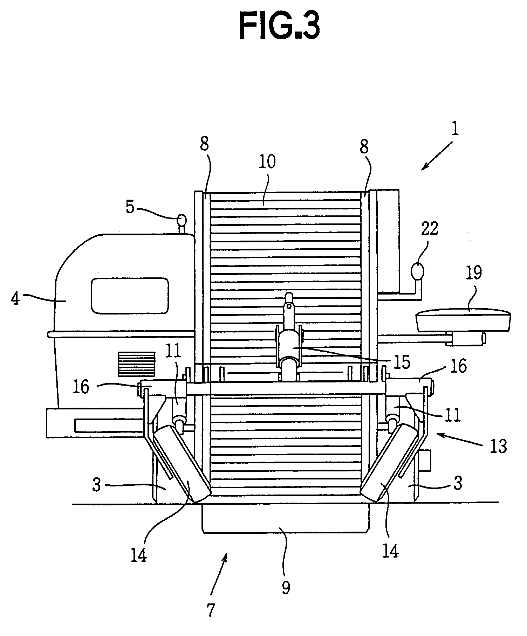

Referring to Figs. 1a to 3, a potato harvester 1 of the present invention has a body 2, and a pair of *caterpillar tracks* 3 provided under the body 2 on the opposite sides thereof for moving the body. An engine 4 is mounted on the body 2, and a fuel tank 4a is mounted on an upper portion of the engine. In the engine 4. a generator driven by the engine and an oil pump are provided (not shown). An operating section 5 is provided in the rear of the engine 4 for operating the harvester 1 and a driver's seat 6 in the form of a stool is provided adjacent the operating section 5.

In front of the body 2, a digger/conveyer device 7 is mounted for digging up potatoes in the field and conveying them onto the harvester 1. The digger/conveyer device 7 comprises a downwardly inclined frame 8, a digger blade 9 secured to the front end of the frame 8, a drive wheel 10a and a driven wheel 10d laterally and rotatably mounted between the opposite side members of the frame 8, and an endless belt conveyer 10 provided between the wheels 10a and 10d.

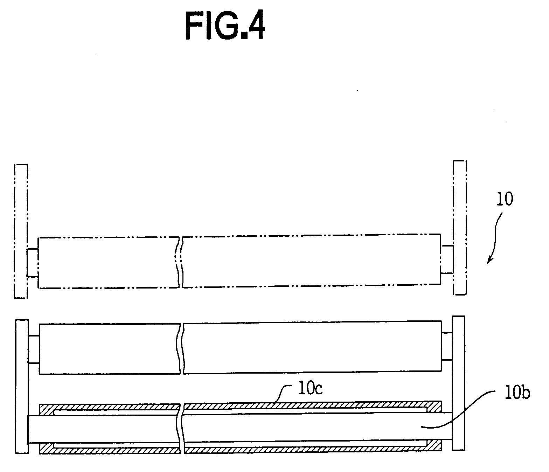

As shown in Fig. 4, the conveyer 10 has an endless belt comprising a plurality of linked rods 10b. Each of the rods 10b is covered by a cylindrical member 10c made of resilient material, such as rubber, rotatably mounted thereon. A cylindrical space 10e is formed between the member 10c and the rod 10b so that the member 10c may wobble during operation of the conveyer. The frame 8 of the conveyer 10 is rotatably mounted on a shaft of the drive wheel 10a so that the front end of the conveyer 10 can be upwardly pivoted about the shaft. The shaft of the drive wheel 10a is connected to the output shaft 4c of the engine 4 through a continuously variable and stepwisely variable transmission 4d. A pair of hydraulic cylinders 11 are provided between the body 2 and the opposite side members of the frame 8 for adjusting the inclination angle of the digger/conveyer device 7, namely the depth of the digging.

A pair of brackets 12 are secured to the opposite side members of the frame 8, projected before the front of the conveyer 10. A ridge tracing device 13 is provided on the brackets 12 so as to trace a ridge of the field during the operation of the harvester. The ridge tracing device 13 comprises a pair of running wheels 14 which roll along opposite shoulder portions of a corresponding ridge.

The ridge tracing device 13 has a vertical adjustment device 15 and a lateral adjustment device 16. Each of the devices 15 and 16 comprises a telescopic member so that the vertical position and the lateral position of the wheels 14 are controlled corresponding to the digger device 7. The axle of each wheel 14 is inwardly inclined in a horizontal plane as is in the toe-in, and also outwardly inclined in a vertical plane as is the camber-angle.

Behind the digger/conveyer device 7, a grading conveyer device 18 is provided for grading the potatoes fed from the conveyer 10. The grading conveyer device 18 comprises an endless flat top conveyer 18a.

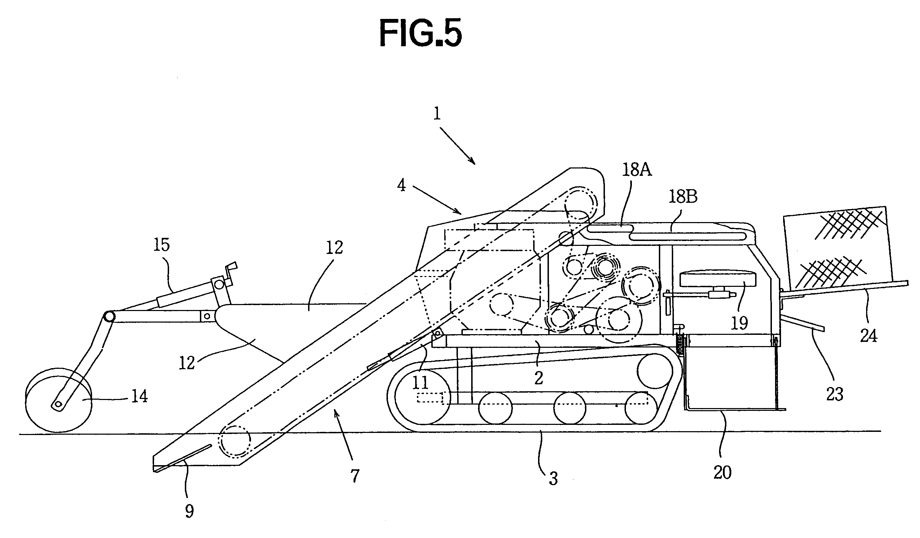

As shown in Fig. 5, the grading device 18 may be provided with a feeding conveyer 18A and a grading conveyer 18B successively provided behind the feeding conveyer 18A. In this example, the speed of the feeding conveyer 18A is set to be faster than the conveyer 18B.

The opposite sides of the grading conveyer device 18 are provided for grade working of potatoes. The driver's seat 6 at the rear of the operation section 5 is also located on one of the sides of the conveyer 18a so that a driver on the seat 6 also serves as a worker for grading the potatoes fed on the conveyer 18a. A working seat 19 in the form of a stool is provided opposite to the seat 6. A step 5a is provided at a lower portion of the operating section 5 corresponding to the seat 6. Steps 21 and 20 are provided for the respective seats 6 and 19. The steps 20 and 21 can be folded when not used and housed within the body. An auxiliary seat 17 is detachably mounted on the body 2 at the side of the digger/conveyer device 7 for a worker for pre-treating the crops on the conveyer 10. Each of the seats 6, 17 and 19 is rotatable about the stem 6a of the seat, and slidable on the shaft 6b so that the lateral position thereof is adjustable. Furthermore, the height of the seat is also adjustable.

Referring to Fig. 1b, a rake-shaped sieve 23 is provided at the rear end of the grading conveyer device 18, projected from the lower portion thereof. Thus, the root crops discharged from the device 18 are dropped on the field through the rake-shaped sieve 23.

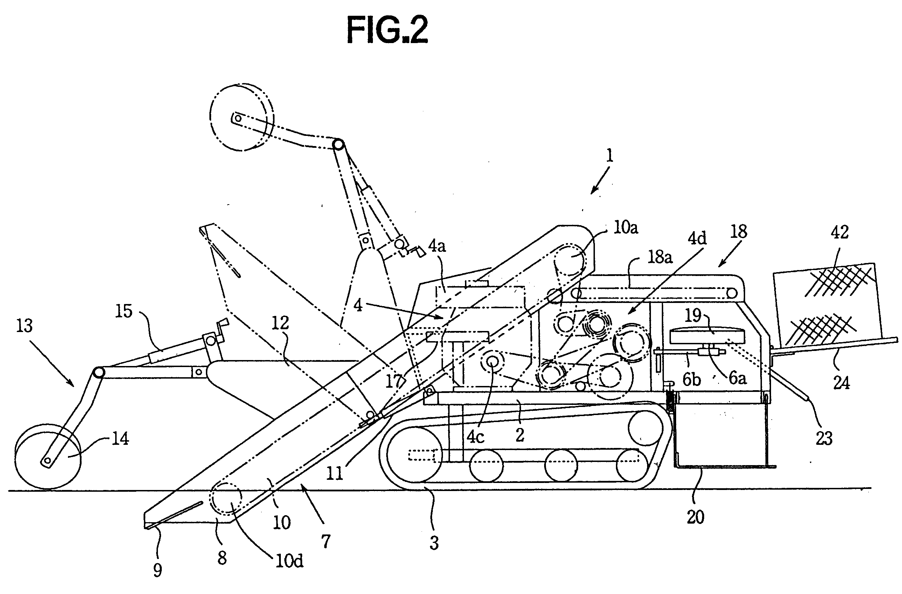

Furthermore, at the rear of the device 18, a rack 24 is provided on the upper portion of the sieve 23. As shown in Fig. 2. a container 42 such as a basket is mounted on the rack 24 during grade working for containing the graded potatoes.

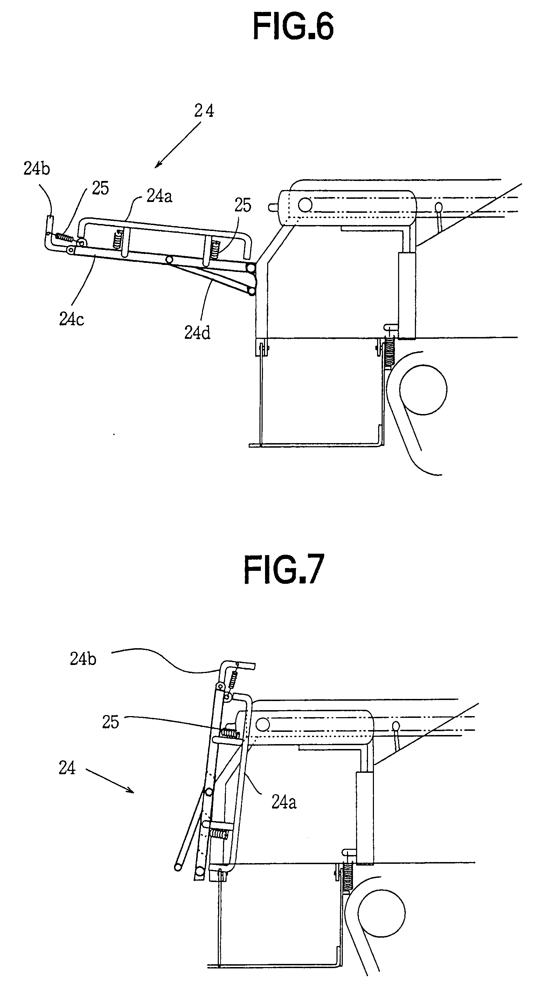

The rack 24 comprises a base 24c, a pair of side frames 24a, and a rear frame 24b. Each of the frames is pivotally attached to the base 24c through toggle springs 25. As shown in Fig. 6, when the rack 24 is used, the frames 24a and 24b are vertically stood on the base 24c and held at the positions by the springs 25. Thus, the container ***43*** mounted on the rack 24 is prevented from dropping during digging and grading. The frames are outwardly fallen down as shown in Fig. 1b and held at the positions by springs 25. Thus, the container ***43*** can be easily taken out from the rack. As shown in Fig. 71 the rack 24 can be folded when not used.

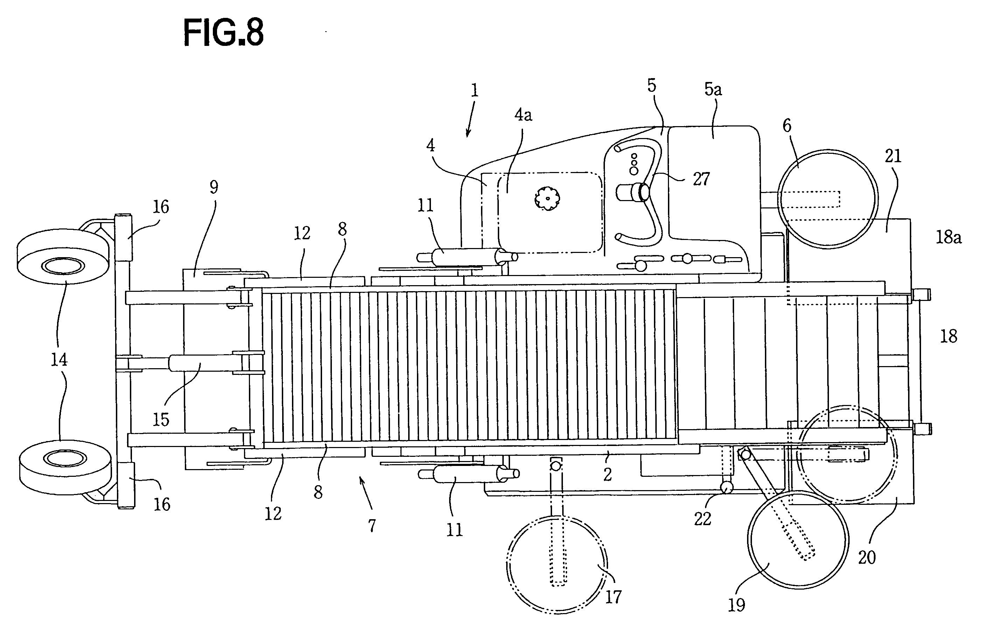

The operating section 5 is provided with a pair of control levers 26, a travelling clutch lever, and a clutch lever for operating the conveyer 10. A clutch lever 22 is provided adjacent to the working seat 19 of the opposite side of the machine body to be operatively connected to the clutch levers on the operating section 5. Thus, the clutch levers are operated on the either side of the *machine body*. The speed of the conveyer 10 is variably controlled. In place of the control levers 26, a steering handle 27 is provided as shown in Fig. 8.

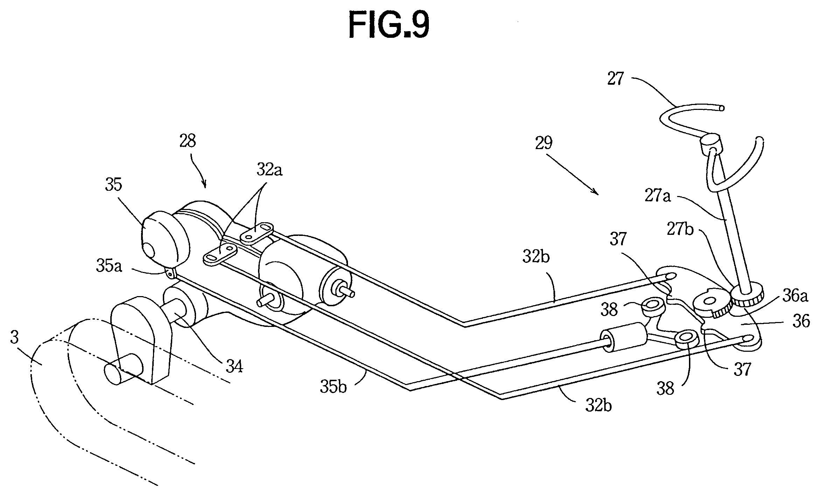

The operating system for the crawlers 3 will be described with reference to Fig. 9. The *caterpillar track* operating system is mounted on the front portion of the body 2 and comprises a control system 29, a *first transmission* 28, and a brake system 35. The control system 29 comprises a tight arm 36 having a gear 36a and a pair of cams 37. A shaft 27a of the handle 27 has a gear 27b which is engaged with the gear 36a. A pair of rods 32b, each of which is connected with a clutch arm 32a of the *first transmission* 28, are connected to the opposite end portions of the tight arm 36. The cams 37 are engaged with a pair of cam followers 38 which are rotatably mounted on a brake rod 35b *engage* with a brake arm 35a of the brake system 35.

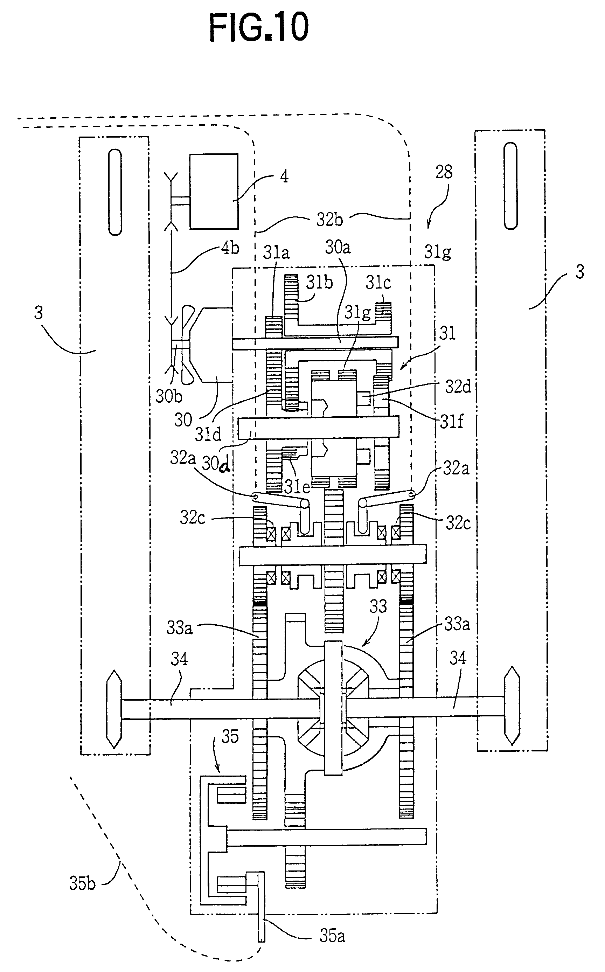

Referring to Fig. 10, the *first transmission* 28 comprises a hydraulic continuously variable transmission 30 an input shaft 30b of which is connected to the engine 4 through a belt and pulley device 4b, a speed change gear device 31, a pair of side clutches 32c, and a differential 33. The speed change gear device 31 has three gears 31a, 31b and 31c. The gear 31a is secured to an input shaft 30a, and gears 31b and 31c are rotatably mounted on the shaft 30a. Three gears 31d, 31e and 31f are rotatably mounted on a shaft 30b and engaged with the gears 31a to 31c, respectively. A pair of clutches 32d formed on opposite sides of a gear 31g which is slidably mounted on the shaft 30b are provided to be selectively engaged with gears 31e and 31f. Thus, low speed and high speed are selected by operating the clutches 32d. Each of the side clutches 32c has a clutch arm 32a. The side clutches 32c are connected to the *caterpillar tracks* 3 through gears 33a, and axles 34. A differential 33 is provided between the axles 34. The brake system 35 is operatively connected to the case of the differential 33 and connected with the brake arm 35a. The side clutches 32c are engaged at straight ahead driving.

When *turning* the harvester, one of the side clutches 32c which corresponds to the inside *caterpillar track* of the *turn* is disengaged, and the differential case of the differential 33 is braked by the brake system 35. Since the differential case is braked, the *caterpillar track*, the corresponding clutch of which is disengaged, is *rotated in reverse* by the operation of the differential 33. Thus the harvester can be swiveled about a center insides the opposite *caterpillar tracks without advancing the harvester. By controlling the braking for the differential case, the speed of the disengaged caterpillar track can be changed e.g., the caterpillar track can be slowed down, stopped, and driven in reverse*.

When the harvester 1 is not used, the digger/conveyer device 7 is inwardly folded at the central portion thereof for reducing the length shown by dash-dotted lines of Fig. 2. Thus, the harvester can be easily carried on a body of a truck to be housed in a warehouse in a small space.

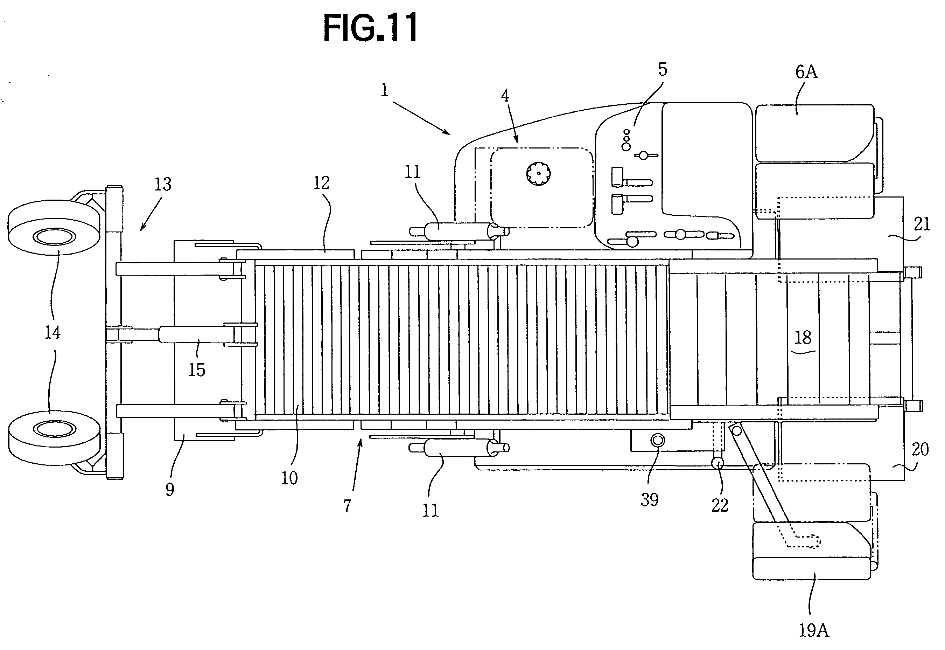

Referring to Fig. 11 showing a modification of the working seats, seats 6A and 19A are used in place of the seats 6 and 19. The worker can use the seat either in a standing state or a sitting state.

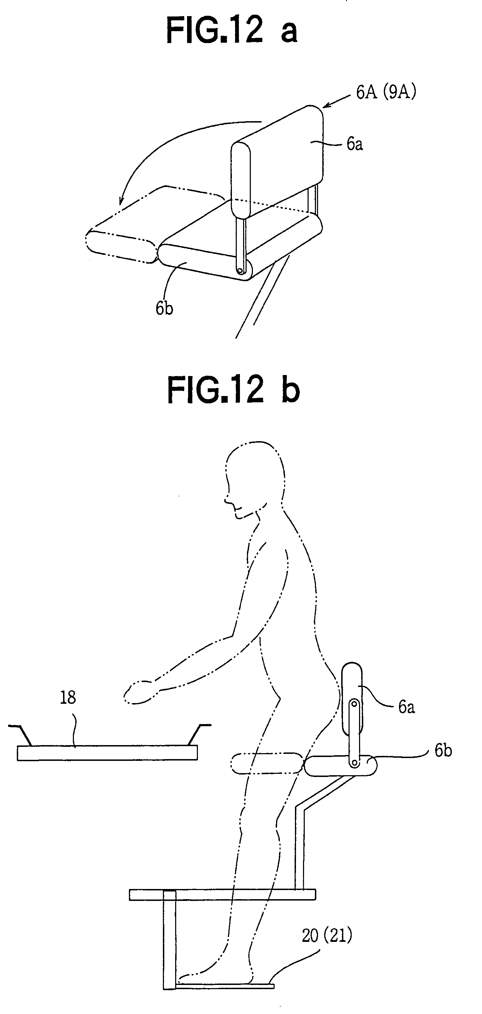

As shown in Fig. 12a, the seat 6A (19A) comprises a seat portion 6b and a backrest 6a pivotally mounted on the seat portion 6b. The backrest 6a is rotated toward the seat portion 6b to be flush with the seat portion to form a large seats if the backrest 6a is set upright, the seat 6A is used in a standing state as shown in Fig. 12b.

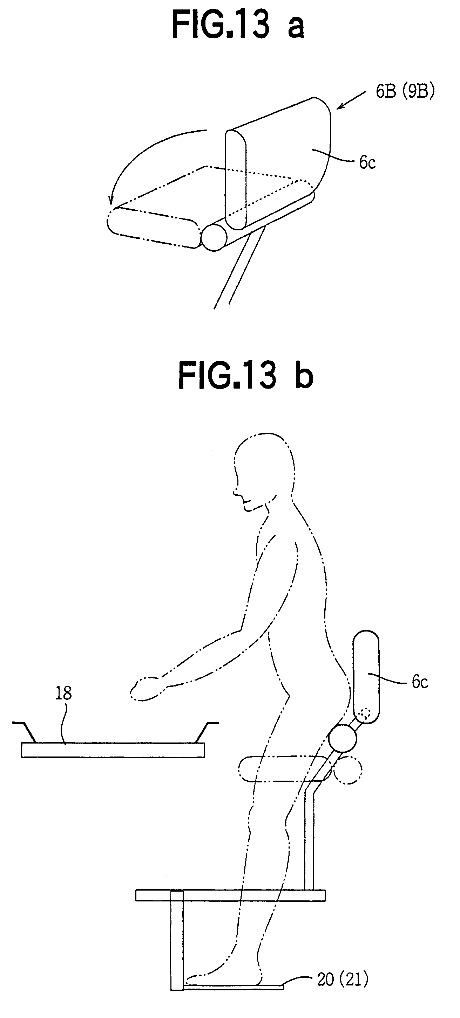

Fig. 13a shows another modification of the seat. A seat 6B (19B) comprises a seat portion 6c rotatable about a shaft secured to a leg of the seat. The seat portion 6c is rotated to a upright position and a flat position so as to be commonly used as a seat or a backrest. The worker uses the seat 6B in a standing state as shown in Fig. 13b.

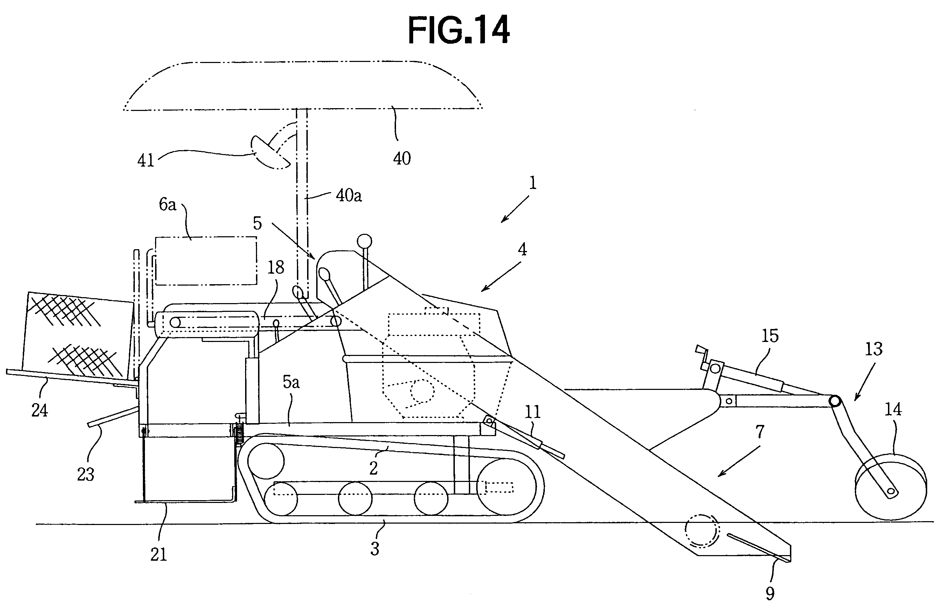

A pole holder 39 (Fig, 1a, 11) is provided on the body 2 for engaging a metal pole 40a of a parasol 40 as shown in Fig. 14 so as to shade the driver or the workers during the harvesting. Furthermore, a fan 41 operated by the electric power generated by the generator is attached to the pole for blowing the wind to the workers. Other electric equipments such as a radio can be attached to the pole 40a.

The operation of the potato harvester will be described.

In order to harvest root crops such as potatoes by the harvester 1, the running wheels 14 of the ridge tracing device 13 is contacted with the shoulder portions of a corresponding ridge and the digger blade 9 of the digger/conveyer device 7 is positioned above the ridge. The depth of the blade 9 is adjusted by the hydraulic cylinders 11. The engine 4 starts to drive the *caterpillar tracks* 3 and the harvester 1 is moved in the forward direction along the ridge. The blade 9 digs up the crops in the field together with the soil around the crops and the crops and soil are inwardly conveyed by the conveyer 10. During the feeding of the crops on the conveyer 10, the soil is separated from the crops by vibration of the conveyer 10 and the wobbling of the cylindrical members 10c of the rods 10a and drops off between the rods 10a. The crops are pre-treated by the worker *sitting* on the auxiliary seat 17. Thus, *vines*, stalks, leaves, large clods, stones, *and material other than potatoes* may be removed from the crops. The crops are then fed to the conveyer 18a of the grading conveyer device 18 on which the crops are graded by the workers *sitting* on the seats 6 and 19. The workers grade the crops during feeding of the crops and the graded crops are put in the container ***43*** on the rack 24. The remaining soil, impurities and unsorted crops are dropped on the field from the end of the conveyer 18a through the sieve 23. Since the soil drops on the field first and then the crops drop on the soil, the dropped crops are exposed on the soil. Thus, the crops can be easily picked up from the field.

During the harvesting, the running wheels 14 roll on the sides of the ridge to automatically guide the body 2 along the ridge. When the harvester 1 reaches the end of the ridge, the driver *acts* to change the travelling direction. Other than that, the driver serves as the worker for grading the crops. Thus, the number of workers is reduced to a minimum.

In order to turn the harvester 1, the handle 27 is operated at a large angle. Since the harvester 1 is provided with the first transmission 28 including the hydraulic transmission 30, speed change gear device 31, differential 33 and brake system 35 for operating the *caterpillar tracks* 3, it is possible to swivel the ***harvester*** at a minimum radius as described before.

The speed of the conveyer 10 is changed by the transmission 4d. By combining the speed control of the *caterpillar tracks* 3, the operating speed of the conveyer 10 can be controlled in dependency on conditions of the fields and conditions of the products planted on the field, so that effective harvesting can be performed on the field on a small scale.

The operating section 5 and the clutch lever 22 are provided *on* opposite sides to the body 2 so that it is possible to stop the travelling and harvest working of the harvester in case of emergency at either side.

The conveyer 18a uses a flat belt so that the worker is prevented from injuring his *fingers* during the grading. Furthermore, if the feeding conveyer 18A and grading conveyer 18B having different speeds is used, the crops fed from the conveyer 10 are smoothly transferred to the conveyer 18A so that the crops are not introduced into a space under an end portion of the conveyer 10. Thus, crops are prevented from bruising during the conveying thereof.

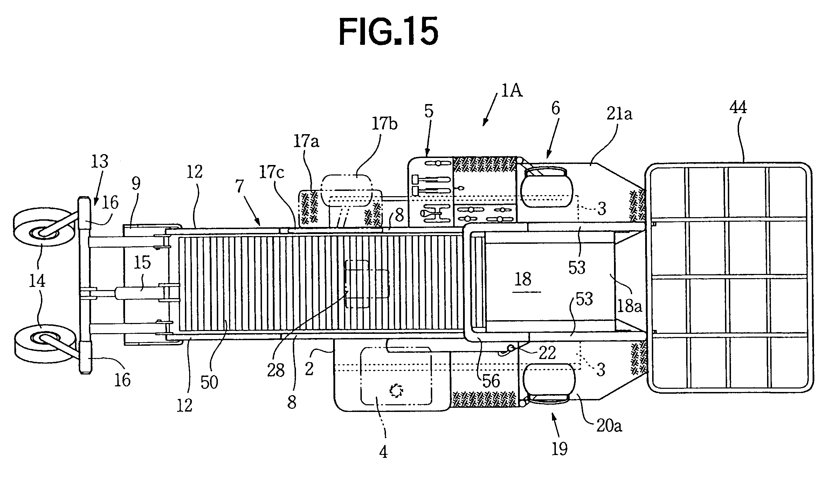

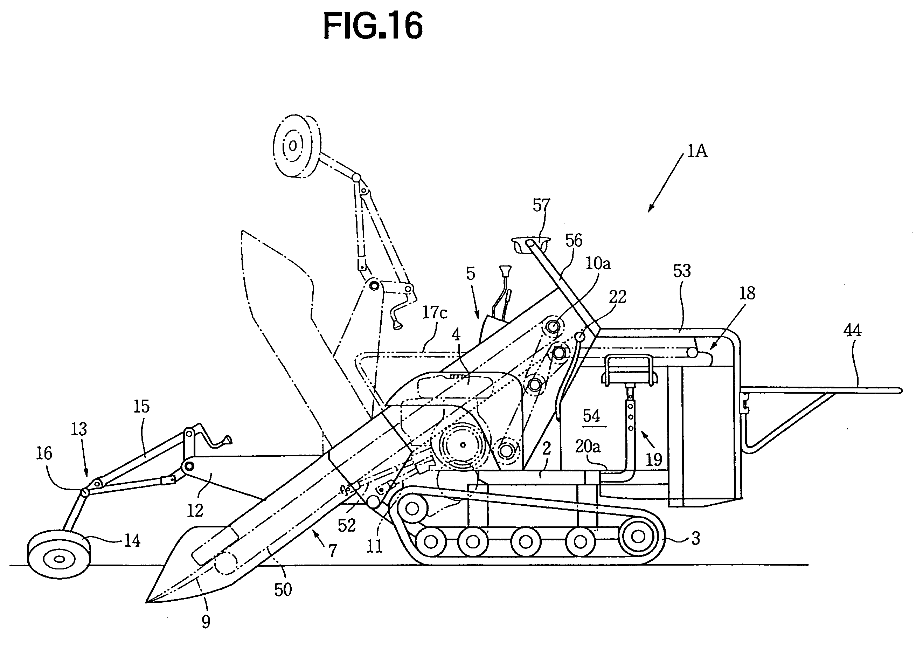

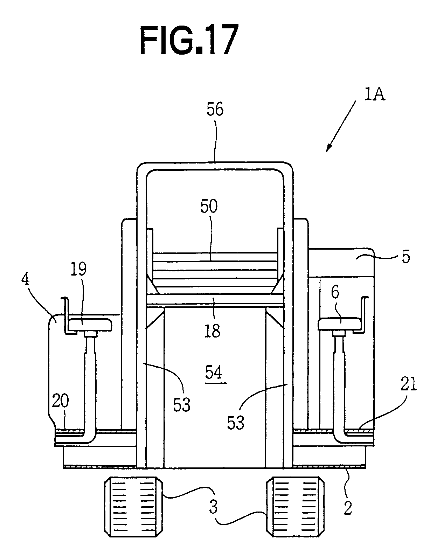

Referring to Figs. 15 to 18 showing the second embodiment of the potato harvester, the same parts as the first embodiment are identified with the same reference numerals as Figs. 1 to 14.

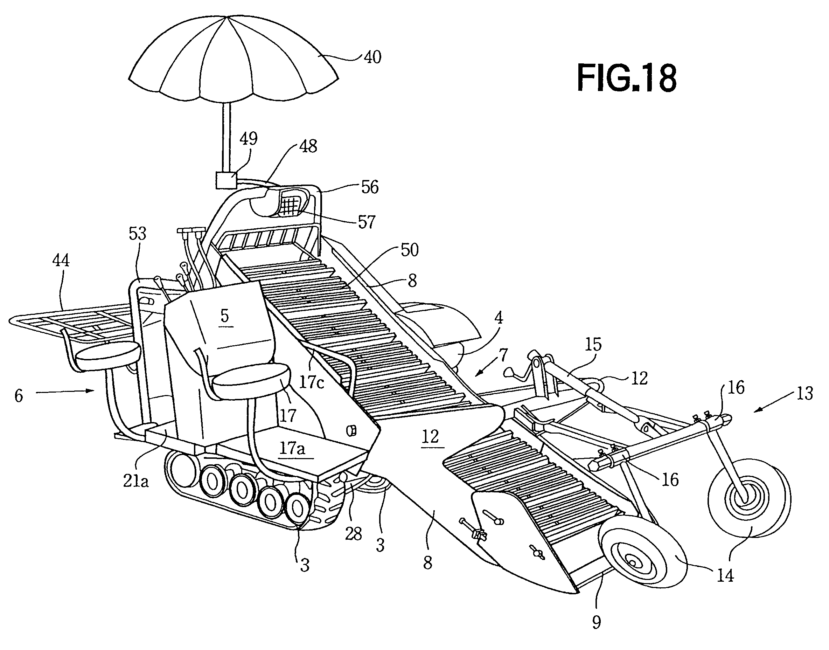

In a potato harvester 1A of the second embodiment, the engine 4 is provided on the body 2 opposite to the control section 5. The digger conveyer device 7 has a conveyer 50 of a slat conveyer having a plurality of slats provided on the link chains at a predetermined distance as shown in Fig. 18. A pair of hydraulic cylinders 52 are provided for changing the digger/conveyer device 7 in a folded state and in an operating state. The transmission 28 is disposed in a front portion of the body 2 at a central portion thereof.

The auxiliary seat 17 is provided adjacent to the control section 5 and has a step 17a and a safety rail 17c which are detachably mounted on the body. A pair of safety rails 53 are provided adjacent the working seats 6 and 19 along the opposite sides of the conveyer 18a. The safety rails 53 serve also as reinforcements for the body 2. It is very convenient for the workers to grip them when they are stepped on or off the steps 20a and 21a. A lateral U-shaped bar 56 is connected to both ends of the safety rails 53 over the conveyer 50. On the lateral bar 56, a light 57 is mounted. As shown in Fig. 18, an arm 48 is connected to the bar 56 and the parasol 40 is detachably secured to the arm 48 through a pole holder 49.

A space 54 is provided under the grading conveyer device 18 for discharging soil and impurities on the field or for housing a container. A rack 44 is attached to the body 2 at the rear of the device 18. On the rack 44, a plurality of containers may be mounted. The rack is adapted to be folded when not used and the vertical position thereof is adjustable. Alternatively, a rack portion may be provided on each of the steps 20a and 21a, outwardly projected therefrom and a container may be mounted on the rack portion.

The potato harvester 1A of the second embodiment is operated with the same manner as the first embodiment.

The conveyer 18a of the grading conveyer device 18 can be replaced with the various types in dependency on the crops and the growing conditions of the crops. In the embodiment, since the conveyer 18a is flat belt, the whole amount of crops fed through the conveyer 50 are fed to the conveyer 18a.

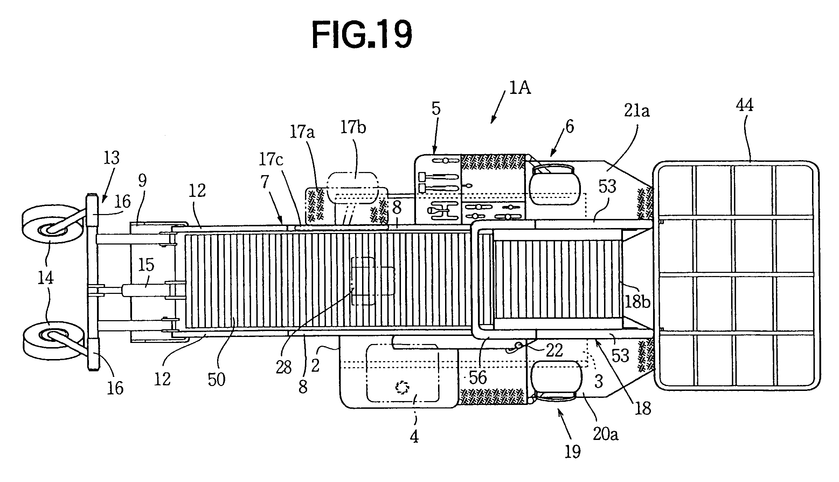

Referring to Fig. 19, a conveyer 18b comprises a series of rods forming an endless belt. Thus, during feeding, soil and small roots drop off between the rods.

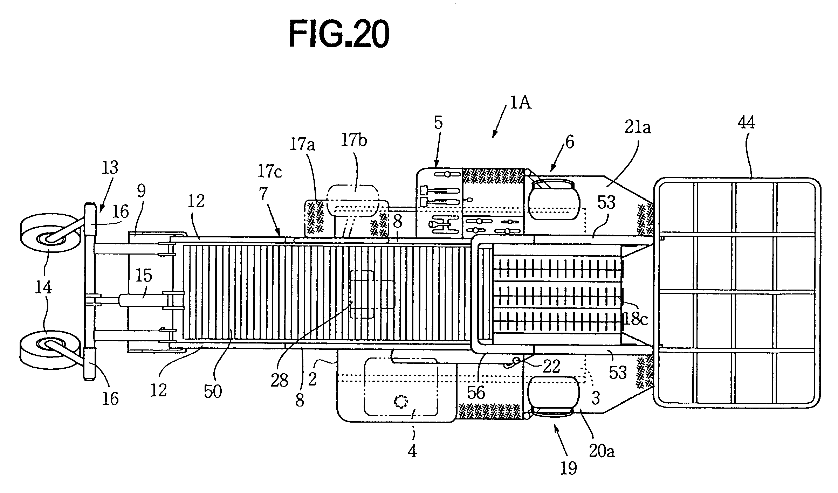

Fig. 20 shows a rope conveyer 18c having a plurality of ropes stretched in the longitudinal direction of the conveyer and a plurality of lateral bars are attached every other rope at a predetermined distance. During feeding, soil, stalks, leaves and small potatoes drop off passing between the ropes and bars.

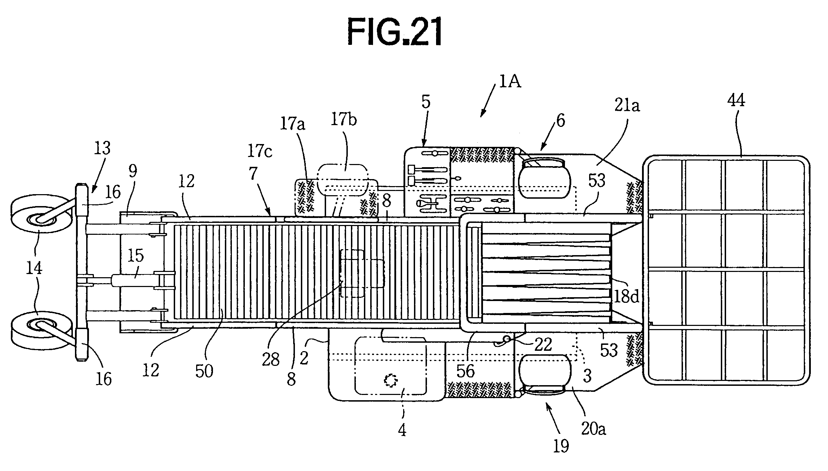

Referring to Fig. 21, a roller conveyer 18d comprises seven taper rollers disposed in the longitudinal direction of the conveyer 18d. The large diameter portion of the taper roller is disposed at the front of the conveyer. The soil, stalks, leaves and small potatoes actively drop off between the taper portions of the rollers.

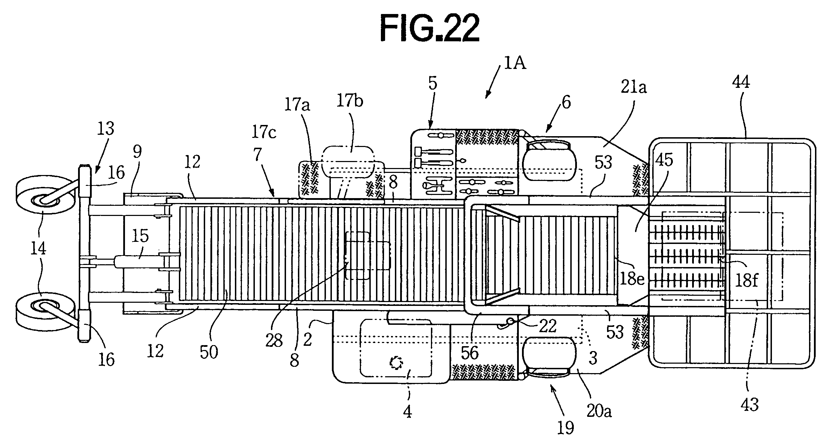

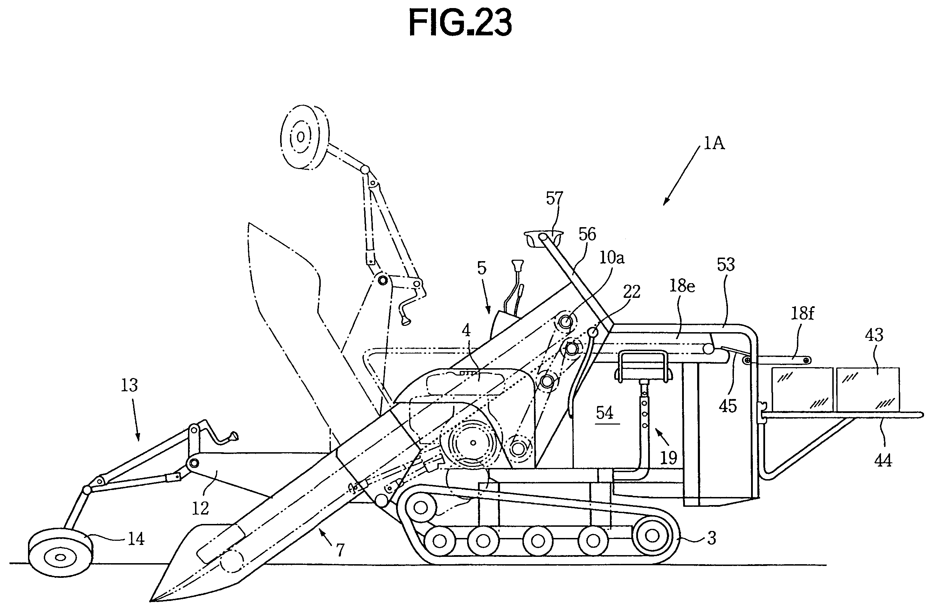

Fig. 22 and 23 show a further modification of the grading device 18 of the harvester 1A. The grading conveyer device 18 comprises a first grading conveyer 18e, a second grading conveyer 18f which is detachably provided, and a connecting plate 45 interposed between the first and second conveyers. The first conveyer 18e has the same construction as the conveyer 18b and the second conveyer 18f is the same as the conveyer 18c. A container 43 mounted on the rack 44 is disposed at the rear end of the conveyer 18f.

The crops fed from the conveyer 50 to the conveyer 18e are manually sorted by the workers *on the seats 6 and 19 in grading spaces provided on longitudinally opposite sides of the grading conveyor (18)* to discharge admixtures other than the potatoes. Small potatoes drop off passing through the conveyer 18e and put in the container housed in the space 54. The potatoes which are larger than the middle size are remained on the conveyer 18e and fed to the conveyer 18f passing through the plate 45 and automatically put into the container 43. In the modification, since the potatoe are automatically put in the container, the worker on the seat 19 may be omitted. In accordance with the present invention, in a potato harvester used on a field on a small scale, an operating system of the harvester such as the engine, control system, transmission is mounted on the front portion of the body and the driver and workers are located on the rear portion thereof. Thus, the body is balanced, driveability, steerability and stability of the body during the harvesting working are improved.

Since the speeds of the *caterpillar tracks* and the digger conveyer are varied in dependency on conditions of the crops and the field, the ***crops*** may be exactly dug up and conveyed, thereby improving workability and working accuracy.

The grading conveyer is provided at the rear of the digger conveyer and replaced in dependency on the crops. Thus, the crops are properly sorted by a small number of workers.

The potato harvester of the present invention can be used for collecting cans, bottles and chips of wood which are thrown away on the beach. In this case, the ridge tracing device 13 is removed from the body.

## Claims

1. A harvester for root crops and for picking up rubbish having:
a body (2),
a pair of caterpillar tracks (3) for supporting and moving the body (2),
an engine (4) for driving the caterpillar tracks (3) by means of a first transmission (28),
a longitudinally extending digger conveyer (10) mounted on a front and central portion of the body (2) and adapted to be inclined downwardly during harvesting, and
a digger blade (9) mounted in front of the digger conveyor (10) to dig up crops,
a grading conveyor (18) behind the digger conveyor (10) to receive crops from the digger conveyor (10),
a second transmission system (4d) for transmitting the power of the engine to the conveyors (10 18),
grading spaces provided on longitudinally opposite sides of the grading conveyor (18) for grading the crops,
characterised in that said first transmission (28) includes a continuously variable transmission (30) to continuously vary the drive ratio of the first transmission (28) and a gearbox (31) to vary the drive ratio of the first transmission (28) in steps,
said second transmission comprising a working clutch (4e) for coupling and uncoupling the conveyors (10 18),
a driving clutch consisting of a pair of side clutches (32c) one to each caterpillar track (3) for selectively coupling the engine, via the first transmission (28), to the caterpillar tracks (3) for steering the harvester,
the first transmission also including a differential (33) disposed between drive axles (34) of the caterpillar tracks (3) and a brake system (35) arranged to brake a casing of the differential (33) to brake the caterpillar tracks (3) so that when a one of the side clutches (32c) is disengaged the caterpillar tracks (3) rotate relatively in reverse to turn the harvester.

2. A harvester according to claim 1 wherein the grading conveyor (18) is a flat top conveyer (18a).

3. A harvester according to claim 2 wherein the grading conveyer (18) includes a feed conveyer (18A) to feed the crop to the grading conveyer (18a) and the speed of the feed conveyer (18A) is set to be greater than the speed of the grading conveyer (18a).

4. A harvester according to claim 3 comprising a rake shaped sieve (23) disposed behind the grading conveyer (18a).

5. A harvester according to any one of the preceding claims comprising an operating section (5) provided on one side of the body (2) adjacent a working seat (6) for the driver of the harvester,
and working seats (17 19) and steps (20 21) on the opposite side of the body (2) at a rear portion of the body (2).

6. A harvester according to claim 5 wherein the working seats (17 19) and steps (20 21) are included in the grading space and the operating seat (6) is mounted for rotation about a centre and its height and lateral position are adjustable.

7. A harvester according to any one of the preceding claims wherein the digger blade (9) and the digger conveyer (10) are made into an intgral structure by mounting on a frame (8) and the frame (8) integral structure is pivotally mounted on the body (2).

8. A harvester according to any one of the preceding claims wherein a rear end of the digger conveyer (10) is pivotally mounted on the body (2).

9. A harvester according to any one of the preceding claims wherein a front part of the digger conveyer (10) is mounted to pivot with respect to a rear part of the digger conveyer (10).

10. A harvester according to any one of the preceding claims wherein the digger conveyer (10) comprises an endless belt of rods (10b) said rods extending laterally with respect to the direction of travel of the belt.

11. A harvester according to any one of the preceding claims wherein a ridge tracing device (13) is mounted to extend in front of the digger conveyer (10) to trace a ridge.

12. A harvester according to any one of the preceding claims wherein the engine (4) and the first transmission (28) are disposed above one of said caterpillar tracks (3) and a container (24 43) for crops is disposed behind the grading conveyer (18).

13. A harvester according to any one of the preceding claims wherein a space (54) is provided under the grading conveyor (18) whereby discharging soil and the like can fall to the ground or into a container housed in the space (54).

14. A harvester according to any one of the preceding claims having an auxiliary seat (17) provided to one side of the conveyors (10 18) to enable a worker seated thereon to treat the crops before they are graded.

15. A harvester according to any one of the preceding claims wherein the grading conveyor (18) is replaceable with other types of conveyor.

16. A harvester according to any one of the preceding claims having safety rails (53) provided adjacent the grading spaces, which also serve to reinforce the body (2).

17. A harvester according to any one of claims 6 to 16 wherein the steps (20 21) can be housed within the body (2) when not in use.

18. A harvester according to claim 10 wherein a resilient tubular member (10c) is mounted coaxially and rotatably, one each on each of the rods (10b).

19. A harvester according to claim 11 wherein the ridge tracing device (13) comprises a pair of running wheels (14) arranged to roll along opposite shoulder portions of a ridge, each of the wheels (14) being capable of adjustment vertically and laterally with respect to the digger conveyor (10).

20. A harvester according to claim 19 wherein an axle of each running wheel (14) is inclined in the horizontal plane so that the axis of each wheel converge upwardly and said axis being inclined outwardly in a vertical plane.

21. A harvester according to claim 15 wherein the other types of conveyer include a flat top conveyer, a rod conveyer comprising a series of rods, a rope conveyer comprising a plurality of longitudinal ropes, and a taper roller conveyer.

22. A harvester according to any one of the preceding claims comprising an additional conveyer detachably mounted behind the grading conveyer (18).

## Patentansprüche

1. Erntemaschine für Hackfrüchte und zum Aufnehmen von Abfall mit:
einem Aufbau (2),
einem Paar Raupenketten (3) zum Tragan und Bewegen des Aufbaus (2),
einem Motor (4) zum Antreiben der Raupenketten (3) mittels eines ersten Getriebes (28),
einem sich in Längsrichtung erstreckendan Rodeförderer (10),der an einem vorderen und mittleren Teil des Aufbaus (2) befestigt und angepaßt ist, um während des Erntens nach unten geneigt zu werden, und
einer Rodeschar (9), die vor dem Rodeförderer (10) befestigt ist, zum Roden dar Früchte,
einem Sortierband (18) hinter dem Rodeförderer (10) zum Aufnahmen von Früchten von dam Rodeförderer (10),
einem zweiten Getriebesystem (4d) zum Übertragen der Motorkraft auf die Förderer (10; 18),
an den gegenüberliegenden Längsseiten des Sortierbandes (18) vorgesehene Sortierräume zum Sortieren der Früchte,
dadurch gekennzeichnet, daß das erste Getriebe (28) ein stufenloses Getriebe (30) zum stufenlosan Verändern des Übersetzungsverhältnisses des ersten Getriebes (28) und ein Rädergetriebe (31) zum stufenweisen Verändern des Übersetzungsverhältnisses des ersten Getriebes (28) umfaßt,
wobei das zweite Getriebe eine Arbeitskupplung (4e) zum An- und Entkuppeln der Förderer (10; 18) umfaßt,
eine Antriebskupplung aus einem Paar Seitenkupplungen (32c), einer für jede Raupenkette (2), zum wahlweisen Verbinden des Motors über das erste Getriebe (28) mit den Raupenketten (3) zum Lenken der Erntemaschine besteht,
das erste Getriebe außerdem ein zwischen den Antriebsachsen (34) der Raupenketten (3) angeordnetes Differential und ein zum Bremsen eines Ausgleichsgehäuses des Differentials (33) angeordnetes Bremssystem (35) umfaßt, um die Raupenketten (3) zu bremsen, so daß, wenn eine der Seitenkupplungen (32c) ausgerückt ist, die Raupenketten (3) sich entsprechend rückwärts drehen, um die Erntemaschine zu wenden.

2. Erntemaschine gemäß Anspruch 1, bei der das Sortierband (18) ein Förderband (18a) mit flacher Oberfläche ist.

3. Erntemaschine gemäß Anspruch 2, bei dar das Sortierband (18) einen Zubringer (18A) zum Zuführen der Frucht zu dem Sortierband (18a) umfaßt und die Geschwindigkeit des Zubringers (18A) so eingestellt ist, daß sie größer als die Geschwindigkeit des Sortierbandes (18a) ist.

4. Erntemaschine gemäß Anspruch 3, die ein rechenförmiges Sieb (23) umfaßt, des hinter dem Sortierband (18a) angeordnet ist.

5. Erntemaschine gemäß einem der vorhergehenden Ansprüche, umfassend
einen Bedienungsabschnitt (5), der auf einer Seite des Aufbaus (2) neben einem Arbeitesitz (6) für den Fahrer der Erntemaschine vorgesehen ist,
und Arbeitssitze (17; 19) und Stufen (20; 21) auf der gegenüberliegenden Seite des Aufbaus (2) an einem hinteren Teil des Aufbaus (2).

6. Erntemaschine gemäß Anspruch 5, bei der die Arbeitssitze (17; 19) und Stufen (2O; 21) in dem Sortierraum eingeschlossen sind und der Bedienersitz (6) um einen Mittelpunkt drehbar befestigt und seine Höhen- und Seitenposition einstellbar ist.

7. Erntemaschine gemäß einem der vorhergehenden Ansprüche, bei der die Rodeschar (9) und der Rodeförderer (10) durch Befestigen an einem Rahmen (8) in einem einstückigen Aufbau hergestellt sind und der integrale Aufbau des Rahmens (8) an dem Aufbau (2) schwenkbar befestigt ist.

8. Erntemaschine gemäß einem der vorhergehenden Ansprüche, bei dem ein hinteres Ende des Rodeförderers (10) an dem Aufbau (2) schwenkbar befestigt ist.

9. Erntemaschine gemäß einem der vorhergehenden Ansprüche, bei dem ein vorderes Teil des Rodeförderers (10) so befestigt ist, daß er in Bezug auf ein hinteres Teil des Rodeförderers (10) drehbar ist.

10. Erntemaschine gemäß einem der vorhergehenden Ansprüche, bei der der Rodeförderer (10) ein Endlosband aus Stangen (10b) umfaßt, wobei sich die Stangen in Bezug auf die Bewegungsrichtung des Bandes quer erstrecken.

11. Erntemaschine gemäß einem der vorhergehenden Ansprüche, bei der eine Dammspureinrichtung (13) so befestigt ist, daß sie sich vor dem Rodeförderer (10) an einem Damm entlang erstreckt.

12. Erntemaschine gemäß einem der vorhergehenden Ansprüche, bei der der Motor (4) und das erste Getriebe (28) über einer der Raupenketten (3) angeordnet sind und ein Behälter (24; 43) für Früchte hinter dem Sortierband (18) angeordnet ist.

13. Erntemaschine gemäß einem der vorhergehenden Ansprüche, bei der unter dem Sortierband (18) ein Raum (54) vorgesehen ist, durch den austretendes Erdreich und dergleichen auf den Boden oder in einen in dem Raum (54) aufgenommenen Behälter fallen kann.

14. Erntemaschine gemäß einem der vorhergehenden Ansprüche, die einen auf einer Seite der Förderer (10; 18) vorgesehenen Zusatzsitz (17) besitzt, um einem darauf sitzenden Arbeiter zu ermöglichen, die Früchte zu behandeln, bevor sie sortiert werden.

15. Erntemaschine gemäß einem der vorhergehenden Ansprüche, bei der das Sortierband (18) durch andere Arten von Förderern ersetzbar ist.

16. Erntemaschine gemäß einem der vorhergehenden Ansprüche, die neben den Sortierräumen vorgesehene Schutzgeländer (53) besitzt, die außerdem zum Verstärken des Aufbaus (2) dienen.

17. Erntemaschine gemäß einem der Ansprüche 6 bis 16, bei der die Stufen (2O: 21) in dem Aufbau (2) aufgenommen werden können, wann sie nicht in Benutzung sind.

18. Erntemaschine gemäß Anspruch 10, bei der ein elastisches, rohrförmiges Element (10c) koaxial und jeweils drehbar an jeder der Stangen (10b) befestigt ist.

19. Erntemaschine gemäß Anspruch 11, bei der die Dammspureinrichtung (13) ein Paar Laufräder (14) umfaßt, die so angeordnet sind, daß sie entlang der gegenüberliegenden, hervorspringenden Randteile eines Dammes rollen, wobei jedes der Räder (14) vertikal und seitlich in Bezug auf den Rodeförderer (10) eingestellt werden kann.

20. Erntemaschine gemäß Anspruch 19, bei der eine Achse jedes Laufrades (14) in der horizontalen Ebene geneigt ist, so daß die Achsen jedes Rades nach oben zusammenlaufen, und die Achsen in einer vertikalen Ebene nach außen geneigt sind.

21. Erntemaschine gemäß Anspruch 15, bei der die anderen Arten des Förderers einen oben flachen Förderer, einen eine Reihe von Stangen umfassenden Stangenförderer, einen eine Vielzahl von Längsseilen umfassenden Seilbandförderer und einen Kegelrollenbandförderer umfassen.

22. Erntemaschine gemäß einem der vorhergehenden Ansprüche, die einen hinter dem Sortierband (18) lösbar befestigten zusätzlichen Förderer umfaßt.

## Revendications

1. Moissonneuse pour racines alimentaires et pour ramasser des détritus, comportant :
un corps (2),
deux chenilles (3) destinées à supporter et à déplacer le corps (2),
un moteur thermique (4) destiné à entraîner les chenilles (3) au moyen d'une première transmission (28),
un convoyeur d'arrachage s'étendant longitudinalement (10) monté sur une partie avant et centrale du corps (2) et adapté pour être incliné vers le bas pendant la récolte, et
une lame d'arrachage (9) montée à l'avant du convoyeur d'arrachage (10) pour arracher des produits agricoles,
un convoyeur de triage (18) derrière le convoyeur d'arrachage (10) pour recevoir les produits agricoles provenant du convoyeur d'arrachage (10),
un second système de transmission (4d) pour transmettre la puissance du moteur thermique aux convoyeurs (10, 18),
des espaces de triage prévus sur les côtés longitudinalement opposés du convoyeur de triage (18) pour trier les produits agricoles,
caractérisée en ce que ladite première transmission (28) comprend une transmission à réglage continu (30) pour modifier continuellement le rapport de commande de la première transmission (28) et d'une boîte de vitesse (31) pour modifier le rapport de commande de la première transmission (28) par paliers,
ladite seconde transmission comprenant un embrayage de fonctionnement (4e) destiné à accoupler et à désaccoupler les convoyeurs (10, 18), un embrayage d'entraînement consistant en deux embrayages latéraux (32c), un à chaque chenille (3), pour accoupler de manière sélective le moteur thermique, via la première transmission (28), aux chenilles (3) pour conduire la moissonneuse,
la première transmission comprenant également un différentiel (33) disposé entre les essieux de commande (34) des chenilles (3) et un système de freinage (35) agencé pour freiner un boîtier du différentiel (33) pour freiner les chenilles (3), de sorte que, lorsque l'un des embrayages latéraux (32c) est dégagé, les chenilles (3) se mettent en rotation relativement en marche arrière pour faire tourner la moissonneuse.

2. Moissonneuse selon la revendication 1, dans laquelle le convoyeur de triage (18) est un convoyeur à charnières (18a).

3. Moissonneuse selon la revendication 2, dans laquelle le convoyeur de triage (18) comprend un convoyeur d'alimentation (18A) pour amener le produit agricole vers le convoyeur de triage (18a) et dans laquelle la vitesse du convoyeur d'alimentation (18A) est fixée pour être supérieure à la vitesse du convoyeur de triage (18a).

4. Moissonneuse selon la revendication 3, comprenant un crible en forme de râteau (23) disposé derrière le convoyeur de triage (18a).

5. Moissonneuse selon l'une quelconque des revendications précédentes, comprenant une section de commande (5) prévue sur un côté du corps (2) contiguë à un siège de travail (6) pour le conducteur de la moissonneuse,
et des sièges de travail (17, 19) et des marchepieds (20, 21) sur le côté opposé du corps (2) à une partie arrière du corps (2).

6. Moissonneuse selon la revendication 5, dans laquelle les sièges de travail (17, 19) et les marchepieds (20, 21) sont compris dans l'espace de triage et dans laquelle le siège de commande (6) est monté pour rotation autour d'un centre et sa hauteur et sa position latérale sont réglables.

7. Moissonneuse selon l'une quelconque des revendications précédentes, dans laquelle la lame d'arrachage (9) et le convoyeur d'arrachage (10) sont réalisés en une structure intégrale par montage sur un châssis (8) et la structure intégrale du châssis (8) est montée, de manière pivotante, sur le corps (2).

8. Moissonneuse selon l'une quelconque des revendications précédentes, dans laquelle une extrémité arrière du convoyeur d'arrachage (10) est montée, de manière pivotante, sur le corps (2).

9. Moissonneuse selon l'une quelconque des revendications précédentes, dans laquelle une partie avant du convoyeur d'arrachage (10) est montée pour pivoter par rapport à une partie arrière du convoyeur d'arrachage (10).

10. Moissonneuse selon l'une quelconque des revendications précédentes, dans laquelle le convoyeur d'arrachage (10) comprend une bande sans fin de biellettes (10b), lesdites biellettes s'étendant latéralement par rapport à la direction de mouvement de la bande.

11. Moissonneuse selon l'une quelconque des revendications précédentes, dans laquelle un dispositif de traçage de sillon (13) est monté pour s'étendre à l'avant du convoyeur d'arrachage (10) pour tracer un sillon.

12. Moissonneuse selon l'une quelconque des revendications précédentes, dans laquelle le moteur thermique (4) et la première transmission (28) sont disposés au-dessus de l'une desdites chenilles (3) et dans laquelle un conteneur (24, 43) pour des produits agricoles est disposé derrière le convoyeur de triage (18).

13. Moissonneuse selon l'une quelconque des revendications précédentes, dans laquelle un espace (54) est prévu sous le convoyeur de triage (18), de telle manière que la terre de décharge et similaire puisse tomber sur le sol ou dans un conteneur logé dans l'espace (54).

14. Moissonneuse selon l'une quelconque des revendications précédentes, comportant un siège auxiliaire (17) prévu sur un côté des convoyeurs (10, 18) pour permettre à un ouvrier assis sur celui-ci de traiter les produits agricoles avant qu'ils soient triés.

15. Moissonneuse selon l'une quelconque des revendications précédentes, dans laquelle le convoyeur de triage (18) est susceptible d'être remplacé par d'autres types de convoyeur.

16. Moissonneuse selon l'une quelconque des revendications précédentes, comportant des rails de sécurité (53) prévus contigus aux espaces de triage, qui servent également à renforcer le corps (2).

17. Moissonneuse selon l'une quelconque des revendications 6 à 16, dans laquelle les marchepieds (20, 21) peuvent être logés à l'intérieur du corps (2) lorsqu'ils ne sont pas utilisés.

18. Moissonneuse selon la revendication 10, dans laquelle un élément tubulaire élastique (10c) est monté, de manière coaxiale et rotative, un sur chacune des biellettes (10b).

19. Moissonneuse selon la revendication 11, dans laquelle le dispositif de traçage de sillon (13) comprend deux roues de roulement (14) agencées pour rouler le long des parties de rebord opposées d'un sillon, chacune des roues (14) étant susceptible d'être réglée verticalement et latéralement par rapport au convoyeur d'arrachage (10).

20. Moissonneuse selon la revendication 19, dans laquelle un essieu de chaque roue de roulement (14) est incliné dans le plan horizontal, de sorte que les axes de chacune des roues convergent vers le haut et que lesdits axes soient inclinés vers l'extérieur dans un plan vertical.

21. Moissonneuse selon la revendication 15, dans laquelle les autres types de convoyeur comprennent un convoyeur à charnières, un convoyeur à biellettes comprenant une série de biellettes, un convoyeur à cordes comprenant une pluralité de cordes longitudinales et un convoyeur à rouleaux coniques.

22. Moissonneuse selon l'une quelconque des revendications précédentes, comprenant un convoyeur supplémentaire monté, de manière amovible, derrière le convoyeur de triage (18).
